# EUROPEAN PATENT SPECIFICATION

(11) **EP 4 458 155 B1**
(45) Date of publication and mention of the grant of the patent: **08.10.2025**
(21) Application number: 24171998.8
(22) Date of filing: 23.04.2024
(51) Int. Cl.: A21C 5/02, A21C 5/04, G01F 11/06

(54) **MACHINE FOR FORMING DOUGHS FOR OVEN-BAKED PRODUCTS**
MASCHINE ZUR HERSTELLUNG VON TEIGEN FÜR IM OFEN GEBACKENE PRODUKTE
MACHINE POUR FORMER DES PÂTES POUR PRODUITS CUITS AU FOUR

(30) Priority: 03.05.2023 IT 202300008745
(43) Date of publication of application: 06.11.2024
(73) Proprietor: SOREMARTEC S.A., 2633 Senningerberg (LU)
(72) Inventor: MOLLO, Marco, 12051 Alba (CN) (IT); ZUNINO, Tiziano, 12051 Alba (CN) (IT)
(74) Representative: Buzzi, Notaro & Antonielli d'Oulx S.p.A.

(56) References cited:
- EP-A1- 1 262 111
- EP-B1- 0 449 854
- EP-B1- 2 925 149
- US-A- 4 528 900
- US-A- 4 783 290
- US-A- 4 828 863
- US-A1- 2013 168 416

## Description

The present invention relates to a machine for forming doughs for oven-baked foodstuff products.

In particular, the machine described herein is of the type comprising:
a forming roller that is rotatable about an axis of rotation and has a plurality of cavities giving out onto its outer lateral surface and extending in radial directions of said forming roller,
wherein said forming roller comprises a plurality of pistons that are mobile inside the cavities according to a reciprocating motion of translation, between a first depth and a second depth greater than said first depth,
wherein, when said pistons are located at said first depth, defined inside said cavities are first forming cavities delimited underneath by said pistons and having a depth equal to said first depth, and wherein, when said pistons are located at said second depth, defined inside said cavities are second forming cavities delimited underneath by said pistons and having a depth equal to said second depth.

The machine described herein further comprises:
- a first hopper for feeding a first dough to said cavities of said forming roller, which is positioned in a first position along the lateral surface of said forming roller, and a second hopper for feeding a second dough to said cavities of said forming roller, which is positioned in a second position along the lateral surface of said forming roller, downstream of said first position with respect to the direction of rotation of said forming roller about said axis of rotation;
the machine comprising a system for driving said pistons pre-arranged for setting said pistons at said first depth, in a position corresponding to said first hopper, and for setting said pistons at said second depth, in a position corresponding to said second hopper.

Moreover, the machine described herein comprises a knife positioned downstream of said second hopper and configured for carrying out an action of scraping on the lateral surface of said forming roller so as to remove an amount of dough in excess from said second forming cavity.

A machine of the type referred to above is, for example, described in the European patent EP 2925149 B1.

Such a machine is able to form, in a single forming roller, oven-baked products constituted by at least two layers laid on top of one another obtained from respective doughs of types different from one another.

In fact, thanks to the movement of the aforesaid pistons, the machine described herein is able to define in a selective way, in the forming roller, a first forming cavity and a second forming cavity, which are specifically designed for formation of the first layer of dough and formation of the second layer of dough, respectively.

In particular, during operation of the forming machine in question, the pistons are brought to the first depth in a position corresponding to the first hopper, which contains a first dough, for formation of a first layer of the oven-baked product within the aforesaid first forming cavity. Next, the pistons themselves are brought to the second depth in a position corresponding to the second hopper, which contains a second dough, for formation of a second layer of dough, directly on the first layer, within the aforesaid second forming cavity.

Similarly, EP 0 449 854 B1 is also disclosing a machine for forming doughs.

In this context, the object of the present patent application is, however, to improve the known solutions of the sort referred to above.

In particular, the present applicant has noted that the products formed by the machines according to the prior art comprise layers of dough that are not quantitatively controllable. For example, the present applicant has found that the products formed may have a content of the first dough in excess and an insufficient content of the second dough, or vice versa. In addition to the fact that, in this way, products are obtained that do not perfectly correspond to the pre-defined product, it becomes also particularly problematical to identify the amounts of ingredients that effectively make up the product (or the amounts of characterizing ingredient), which have to be declared to the consumer in the list of ingredients and in the specification of the nutritional composition of the product.

Moreover, machines of a known type suffer from the drawback of being able to operate only for low production volumes.

In order to overcome one or both of the aforesaid drawbacks, the object of the present invention is a forming machine according to claim 1. The present invention moreover regards a process according to claim 8.

The claims form an integral part of the technical teaching provided herein.

Further characteristics and advantages of the present invention will emerge clearly from the ensuing description with reference to the annexed drawings, which are provided purely by way of non-limiting example and in which:
- Figure 1 is a schematic illustration of an example of forming machine according to the present invention;
- Figure 1A illustrates a detail of the machine of Figure 1; and
- Figures 2A to 2F illustrate successive steps of the process described herein for forming doughs for oven-baked products.

In the ensuing description, various specific details are illustrated aimed at enabling an in-depth understanding of the embodiments. The embodiments may be provided without one or more of the specific details, or with other methods, components, materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the machine described herein operates for forming doughs for oven-baked products, for example doughs for biscuits in general.

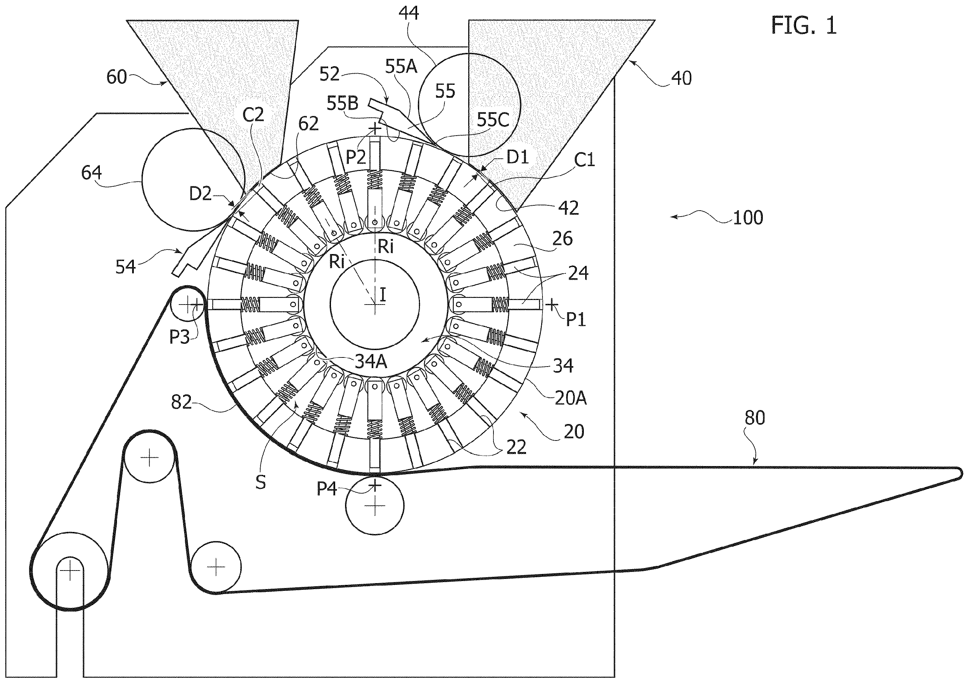

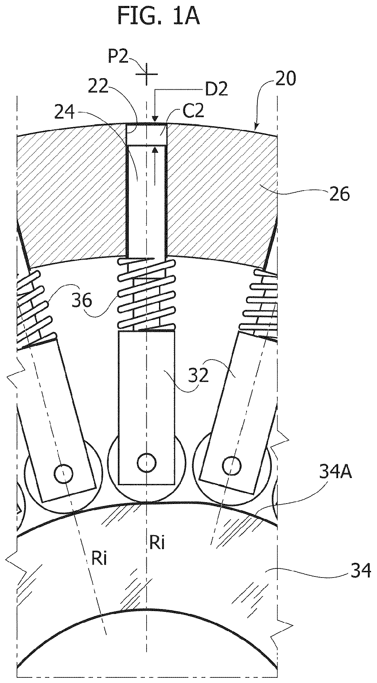

With reference to Figure 1, the machine described herein, designated as a whole by the reference number 100, comprises: a forming roller 20; a first hopper 40 for feeding a first dough to the forming roller 20; a second hopper 60 for feeding a second dough to the forming roller 20; and a conveyor belt 80 for feeding the semi-finished products formed in the forming roller 20 to a subsequent station, located downstream of the machine 100.

In one or more preferred embodiments like the one illustrated, the forming roller 20 is rotatable about an axis of rotation I and has a plurality of cavities 22 giving out onto its outer lateral surface 20An and extending in respective radial directions Ri of the roller itself. For each radial direction Ri, the forming roller 20 may also have, instead of just one cavity 22, an orderly row of cavities 22 that extends along the axis of rotation I of the roller itself. In any case, for simplicity of treatment, in what follows reference will be made to just one cavity 22 for each direction Ri, with the understanding that what will be described hereinafter regards, however, also embodiments provided with orderly rows of cavities 22 along the axis of rotation I.

Arranged inside the cavities 22 are respective pistons 24, which are mobile in the radial directions Ri themselves according to a reciprocating motion of translation.

In one or more preferred embodiments like the one illustrated, the forming roller 20 comprises a cylindrical perimetral wall 26, which defines the aforesaid outer lateral surface 20An and obtained in which are the radial cavities 22. Housed within the space S enclosed by the wall 26 are means for driving the pistons 24.

In one or more preferred embodiments like the one illustrated, the aforesaid driving means comprise compliant members 32 fixedly connected to the pistons 24, and a cam disk 34, having a cam profile 34A, which is engaged by the compliant members 32.

The cam disk 34 is pre-arranged for controlling the position of the pistons 24, through the compliant members 32, as a function of the angular position, about the axis of rotation I, in which the individual piston 24 is located.

In particular, in one or more preferred embodiments like the one illustrated, the cam profile 34A is configured for setting the pistons 24 at a first depth D1, starting from an angular position P1, preferably upstream of the first hopper 40, as far as an angular position (not illustrated) preferably downstream of the first hopper 40 and upstream of the second hopper 60. Moreover, the cam profile 34A is configured for setting the pistons 24 at a second depth D2, greater than the first depth D1, starting from an angular position P2, preferably downstream of the first hopper 40 and upstream of the second hopper 60, preferably as far as an angular position P4. Passage from the depth D1 to the depth D2 and vice versa, by the individual piston 24, is obtained as a result of the movement of the compliant member 32 associated to the piston on the cam profile 34A and is completed within a certain angular distance that is covered by the aforesaid movement.

In the condition where the individual piston 24 is located at the depth D1, defined in the respective cavity 22 is a first forming chamber C1, which is delimited on the bottom by the upper end of the piston 24 and laterally by the side wall of the cavity 22 itself. The first forming chamber C1 gives out directly onto the outer lateral surface 20A of the forming roller 20 and has a depth - from the surface 20A - equal to the depth D1.

Moreover, in the condition where the individual piston 24 is, instead, at the second depth D2, defined in the respective chamber 22 is a second forming chamber C2, which is delimited on the bottom once again by the upper end of the piston 24 and laterally by the side wall of the cavity 22. As in the previous case, the second forming cavity C2 gives out directly onto the outer lateral surface 20A of the forming roller 20 and has a depth - from the surface 20A - equal to the depth D2.

Elastic elements 36 engage the compliant members 34 by exerting an action tending to bring the pistons 24 towards the inside of the respective cavities 22, i.e., towards the axis of rotation I of the forming roller 20.

The angular positions P1, P2, and P4 may vary on the basis of the requirements of the specific applications. In the example illustrated, the angular position P1 is identified at 0°. Incidentally, it should be noted that the angular positions mentioned herein refer to the goniometric circumference in a cartesian plane set orthogonal to the axis of rotation I of the forming roller 20 and with the origin of the co-ordinate axes positioned coinciding with the axis of rotation I itself, where the angles are measured in a counterclockwise direction starting from the point of intersection between the circumference and the positive semi-axis of the abscissae (see Figure 1).

In the example illustrated, the angular position P2 is instead located at 90°, and the position P4 at 270°.

In general, the positions P1 and P2 are such that the aforesaid first forming cavity C1, having a depth equal to the depth D1, is defined in the cavities 22 of the forming roller 20 that are in communication with the inside of the first hopper 40 to receive the first dough.

Likewise, the angular positions P2, P3 are such that the aforesaid first forming cavity C2, having a depth equal to the depth D2, is defined in the cavities 22 of the forming roller 20 that are in communication with the inside of the second hopper 60 to receive the second dough.

As will be seen in what follows, in one or more preferred embodiments like the one illustrated, the angular position P4 is, moreover, preferably selected so that the second forming cavity C2 will continue to be defined in the cavities 22 at least until the two layers of dough, which are contained therein downstream of the second hopper 60, have been definitively released to the conveyor belt 80.

In one or more preferred embodiments like the one illustrated, the forming roller 20 has a diameter of not less than 900 mm.

The above sizing of the forming roller 20 enables a large number of cavities 22 to be obtained on the roller itself, at the same time having available an internal space of the roller sufficient for housing the means necessary to drive all the respective pistons 24.

Thanks to the aforesaid characteristics, the machine described herein is able to achieve production volumes (i.e., amounts of products per unit time) considerably higher than in the case of machines according to the prior art.

In one or more preferred embodiments like the one illustrated, the first hopper 40 comprises a lower outlet 42, set for being substantially tangential to the lateral surface 20A of the forming roller 20. In this way, the dough contained in the hopper presses by gravity on the lateral surface 20A itself and comes to fill directly the forming cavities C1 that, one after another, face the outlet 42 and pass in front of it as a result of rotation of the forming roller 20.

In one or more preferred embodiments like the one illustrated, the machine 100 further comprises a presser roller 44, which is substantially tangential to the lateral surface 20A of the forming roller 20 and is set on the side downstream of the outlet 42 of the hopper 40, with reference to the direction of rotation of the forming roller 20, and faces, with a portion of its lateral surface, the inside of the hopper 40, overlying the outlet 42 itself; the presser roller 44 is designed to perform an action of pressure on the dough contained in the hopper 40 so as to fill the forming cavities C1 effectively and compact the dough inside them.

In one or more preferred embodiments like the one illustrated, the second hopper 60 is set along the lateral surface 20A of the forming roller 20, downstream of the first hopper 40 and in a position at a distance therefrom.

Preferably, the second hopper 60 has the same configuration as the one described above with reference to the first hopper 40. Moreover, a second presser roller 64 is associated to the second hopper 60 according to the same modality described above with reference to the presser roller 44.

According to an important characteristic of the solution described herein, the machine 100 comprises a knife 52, positioned upstream of the second hopper 60 and downstream of the first hopper 40 and configured for carrying out an action of scraping on the lateral surface 20A of the forming roller 20 in a position bordering on the outlet 42 of the first hopper 40. Moreover, the machine 100 comprises a further knife 54, set downstream of the second hopper 60 and configured for carrying out an action of scraping on the lateral surface 20A of the forming roller 20 in a position bordering on the outlet 62 of the hopper itself.

The aforesaid action of scraping of the two knives 52, 54 has the purpose of removing the dough in excess that is located on top of the forming cavities C1 or C2, at the moment when their communication with the inside of the hopper 40 or 60 is about to be interrupted as a result of advance of the cavities themselves along the path about the axis of rotation I. Preferably, the dough in excess removed remains within the respective hopper; alternatively, the dough removed may in any case be recovered according to modalities known in the art.

In one or more preferred embodiments, each knife comprises a flat blade 55 having a top face 55An and a bottom face 55B in contact with the forming roller 20 in a position corresponding to a distal end of the knife, and a cutting edge 55C that connects together the aforesaid two faces and is set facing in a direction opposite to the direction of rotation of the forming roller. The cutting edge facilitates separation of the dough in excess from the dough set inside the forming cavities.

In one or more preferred embodiments like the one illustrated, each knife, 52 or 54, penetrates between the respective presser roller, 44 or 64, and the forming roller 20, coming into contact with the lateral surface 20A of the roller itself in a position immediately downstream of the point of tangency (or of minimum distance) between the presser roller and the forming roller.

In one or more preferred embodiments like the one illustrated, the knife 52 is oriented so as to set its face 55B facing the forming roller 20 in a plane tangential to the lateral surface 20A of the roller 20 itself, and, in particular, with its end in contact with the lateral surface 20A facing downwards.

On the other hand, the knife 54 is itself also oriented so as to set its face facing the forming roller 20 in a plane tangential to the lateral surface 20A of the roller 20, but with its end in contact with the lateral surface 20A facing, instead, upwards.

It should now be noted that provision of a knife downstream of each hopper, envisaged in the machine described herein, makes it possible to obtain products containing the two different doughs in the pre-set amounts. In this regard, the present applicant has in particular understood that, in the solutions of the prior art, the absence of a knife in a position corresponding to the first hopper entails, instead, the drawback that the forming cavities may be filled with an amount in excess or in defect of the first dough, and consequently that the forming cavities are then filled with an insufficient amount or an amount in excess of the second dough.

The above drawback is, instead, completely overcome in the forming machine described herein.

In one or more preferred embodiments like the one illustrated, the conveyor belt 80 has a first stretch 82 that comes into contact with the lateral surface 20A of the forming roller, in a position P3 downstream of the second hopper, and runs over the surface itself, for a predefined angular range, so as to close the forming cavities C2 and prevent exit of the doughs contained therein. In the example illustrated, the stretch 82 of the conveyor belt 80 starts at the angular position P3, 180°, and terminates at the angular position P4, 270°. Immediately after the angular position P4, the conveyor belt 80 separates from the forming roller 20, thus extracting the two layers of dough laid on top of one another from the respective forming cavities C2.

The conveyor belt 80 then feeds the aforesaid semi-finished products to a further processing station set downstream of the machine 100, for example to an oven or else to a station for filling the products.

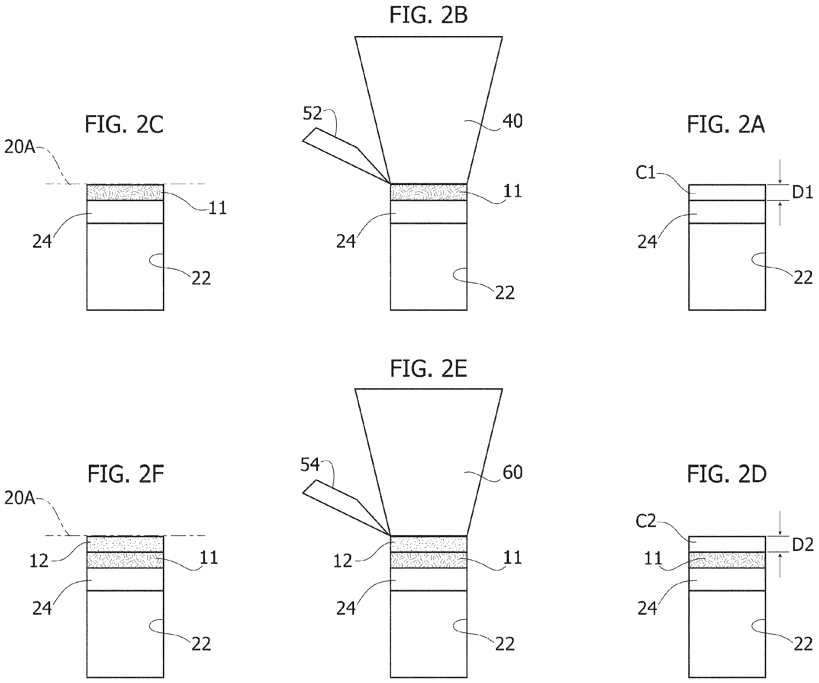

Figures 2A to 2F represent successive steps of operation of the machine 100 with reference to a single cavity 22 of the forming roller 20.

In the position P1, in the single cavity 22 the piston 24 is set at the first depth D1, and in this way, defined in the single cavity 22 is the first forming cavity C1 (see Figure 2A).

Underneath the first hopper 40, the first forming cavity C1 is filled with the first dough, and the dough in excess is removed via the knife 52 (Figure 2B). Consequently, as illustrated in Figure 2C, downstream of the hopper 40, inside the forming cavity C1 there remains a layer 11 of the first dough, the top face of which is perfectly flush with the lateral surface 20A of the forming roller 20.

In the position P2, the piston 24 is then brought to the second depth D2, and there is thus defined in the single cavity 22 the second forming cavity C2, which already contains within it the layer of the first dough (Figure 2D).

Underneath the second hopper 60, the forming cavity C2 is then filled with the second dough, and the dough in excess is removed via the knife 54 (Figure 2E). Downstream of the hopper 60, as illustrated in Figure 2F, inside the forming cavity C2 there remains a layer 12 of the second dough, which is laid over the layer 11 of the first dough and the top face of which is flush with the lateral surface 20A of the forming roller 20.

Finally, in the position P4 the two layers of dough laid on top of one another are released to the conveyor belt 80.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A machine (100) for forming doughs for oven-baked foodstuff products, of the type comprising:
- a forming roller (20), which is rotatable about an axis of rotation (I) and has a plurality of cavities (22) giving out onto its outer lateral surface (20A) and extending in respective radial directions (Ri) of said forming roller (20),
wherein said forming roller (20) comprises a plurality of pistons (24), which are mobile inside the cavities (22), according to a reciprocating motion of translation, between a first depth (D1) and a second depth (D2) greater than said first depth (D1),
wherein, when said pistons (24) are located at said first depth (D1), inside said cavities (22) first forming cavities (C1) are defined, delimited underneath by said pistons (24) and having a depth equal to said first depth (D1), and wherein, when said pistons are located at said second depth (D2), inside said cavities (22) second forming cavities (C2) are defined delimited underneath by said pistons (24) and having a depth equal to said second depth (D2),
said machine (100) further comprising:
- a first hopper (40) for feeding a first dough to said cavities (22) of said forming roller (20), which is positioned in a first position along the lateral surface (20A) of said forming roller (20), and a second hopper (60) for feeding a second dough to said cavities (22) of said forming roller (20), positioned in a second position along the lateral surface (20A) of said forming roller, downstream of said first position of said first hopper with respect to the direction of rotation of said forming roller (20) about said axis of rotation (I);
said machine comprising a system for driving said pistons configured to bring said pistons (24) to said first depth (D1), in a position corresponding to said first hopper (40), and to bring said pistons (24) to said second depth (D2), in a position corresponding to said second hopper (60),
wherein said machine (100) further comprises a knife (54), which is positioned downstream of said second hopper (60) and is configured to carry out an action of scraping on the lateral surface (20A) of said forming roller (20) so as to remove an amount of dough in excess from said second forming cavity (C2),
said machine being **characterized in that** it further comprises a second knife (52), which is positioned upstream of said second hopper (60) and downstream of said first hopper (40) and is configured to carry out an action of scraping on the lateral surface (20A) of said forming roller (20) so as to remove an amount of dough in excess from said first forming cavities (C1).

2. The machine according to claim 1, wherein said second knife (52) is set between said first hopper (40) and said second hopper (60), preferably according to an orientation such that a face (55B) of said second knife (52) facing said forming roller (20) is set in a plane tangential to the lateral surface (20A) of said forming roller (20), and, even more preferably, with an end of said second knife set in contact with said lateral surface (20A) of said forming roller (20) facing downwards.

3. The machine according to claim 1 or claim 2, wherein said first knife (54) is set downstream of said second hopper (60), preferably according to an orientation such that a face of said first knife (54) facing said forming roller (20) is set in a plane tangential to the lateral surface (20A) of said forming roller, and, even more preferably, with an end of said first knife (54) set in contact with said lateral surface (20A) of said forming roller (20) facing upwards.

4. The machine according to any one of the preceding claims, further comprising:
- a first presser roller (44), substantially tangential to said forming roller (20) and set on the side downstream of an outlet (42) of said first hopper, with reference to the direction of rotation of the forming roller (20), which is configured for carrying out an action of pressure on the dough so as to fill said first forming cavities (C1) and compact the dough contained therein; and
- a second presser roller (64), substantially tangential to said forming roller (20) and set on the side downstream of an outlet (62) of said second hopper, with reference to the direction of rotation of the forming roller (20), which is configured for carrying out an action of pressure on the dough so as to fill said second forming cavities (C2) and compact the dough contained therein.

5. The machine according to claim 4, wherein said first knife (54) penetrates between said second presser roller (64) and said forming roller (20) coming into contact with the lateral surface (20A) of said forming roller (20) in a position immediately downstream of a point of tangency, or of minimum distance, between said second presser roller (64) and said forming roller (20).

6. The machine according to claim 4, wherein said second knife (52) penetrates between said first presser roller (44) and said forming roller (20) coming into contact with the lateral surface (20A) of said forming roller (20) in a position immediately downstream of a point of tangency, or of minimum distance, between said second presser roller (64) and said forming roller (20).

7. The machine according to any one of the preceding claims, wherein said forming roller (20) has a diameter of at least 900 mm.

8. The machine according to any one of the preceding claims, comprising a conveyor belt (80) for feeding the semi-finished products formed in said forming roller to a subsequent processing station, set downstream of said machine,
wherein said conveyor belt (80) comes into contact with the lateral surface (20A) of said forming roller (20) and runs over it, for a predefined stretch, so as to close said second forming cavities (C2) and prevent exit of said semi-finished products from said second forming cavities (C2).

9. A process for operating a forming machine (100) according to any one of the preceding claims, comprising the steps of:
- positioning said pistons (24) at said first depth (D1) in said cavities (22) of said forming roller (20), inside said cavities (22) there being defined said first forming cavities (C1);
- via said first hopper (40), filling said first forming cavities (C1) with a first dough;
- via said second knife (52), carrying out an action of scraping on the lateral surface (20A) of said forming roller (20) to remove an amount in excess of said first dough from said first forming cavities (C1), within said first forming cavities (C1) there being formed a first layer of said first dough;
- positioning said pistons (24) at said second depth (D2) in said cavities (22) of said forming roller (20), inside said cavities (22) there being defined said second forming cavities (C2);
- via said second hopper (60), filling said second forming cavities (C2) with a second dough that is laid over said first layer of said first dough;
- via said first knife (54), carrying out an action of scraping on the lateral surface (20A) of said forming roller (20) to remove an amount in excess of said second dough from said second forming cavities (C2), within said second forming cavities (C2) there being formed a second layer of said second dough laid over said first layer of said first dough; and
- feeding said first layer of said first dough and said second layer of said second dough laid over said first layer of each of said second forming cavities to a processing station.

10. The process according to claim 9, wherein filling said first forming cavities (C1) with said first dough includes pressing said first dough against said first forming cavities (C1) via said first presser roller (44).

11. The process according to claim 9, wherein filling said second forming cavities (C2) with said second dough includes pressing said second dough against said first dough within said second forming cavities (C2) via said second presser roller (64).

## Patentansprüche

1. Maschine (100) zum Formen von Teigen für ofengebackene Lebensmittelprodukte, aufweisend:
- eine Formwalze (20), die um eine Drehachse (I) drehbar ist und eine Mehrzahl von Hohlräumen (22) aufweist, die zu ihrer äußeren Umfangsseite (20A) hin offen sind und sich in jeweiligen radialen Richtungen (Ri) der Formwalze (20) erstrecken,
wobei die Formwalze (20) eine Mehrzahl von Kolben (24) aufweist, die innerhalb der Hohlräume (22) gemäß einer translatorischen Pendelbewegung zwischen einer ersten Tiefe (D1) und einer zweiten Tiefe (D2), die größer ist als die erste Tiefe (D1), beweglich sind,
wobei, wenn sich die Kolben (24) an der ersten Tiefe (D1) befinden, innerhalb der Hohlräume (22) erste Formhohlräume (C1) definiert sind, die nach unten durch die Kolben (24) begrenzt sind und eine Tiefe aufweisen, die gleich der ersten Tiefe (D1) ist, und wobei, wenn sich die Kolben an der zweiten Tiefe (D2) befinden, innerhalb der Hohlräume (22) zweite Formhohlräume (C2) definiert sind, die nach unten durch die Kolben (24) begrenzt sind und eine Tiefe aufweisen, die gleich der zweiten Tiefe (D2) ist,
wobei die Maschine (100) ferner aufweist:
- einen ersten Trichter (40) zum Zuführen eines ersten Teigs zu den Hohlräumen (22) der Formwalze (20), der in einer ersten Position entlang der lateralen Oberfläche (20A) der Formwalze (20) positioniert ist, und einen zweiten Trichter (60) zum Zuführen eines zweiten Teigs zu den Hohlräumen (22) der Formwalze (20), der in einer zweiten Position entlang der lateralen Oberfläche (20A) der Formwalze stromabwärts der ersten Position des ersten Trichters in Bezug auf die Drehrichtung der Formwalze (20) um die Drehachse (I) positioniert ist;
wobei die Maschine ein System zum Antreiben der Kolben aufweist, das dazu ausgestaltet ist, die Kolben (24) in die erste Tiefe (D1) in einer dem ersten Trichter (40) entsprechende Position zu bringen und die Kolben (24) in die zweite Tiefe (D2) in einer dem zweiten Trichter (60) entsprechenden Position zu bringen,
wobei die Maschine (100) ferner ein Messer (54) aufweist, das stromabwärts des zweiten Trichters (60) positioniert und dazu ausgestaltet ist, einen Vorgang des Schabens an der lateralen Oberfläche (20A) der Formwalze (20) durchzuführen, um eine überschüssige Teigmenge von dem zweiten Formhohlraum (C2) zu entfernen,
wobei die Maschine **dadurch gekennzeichnet ist, dass** sie ferner ein zweites Messer (52) aufweist, das stromaufwärts des zweiten Trichters (60) und stromabwärts des ersten Trichters (40) positioniert und dazu ausgestaltet ist, einen Vorgang des Schabens an der lateralen Oberfläche (20A) der Formwalze (20) durchzuführen, um eine überschüssige Teigmenge von den ersten Formhohlräumen (C1) zu entfernen.

2. Maschine nach Anspruch 1, wobei das zweite Messer (52) zwischen dem ersten Trichter (40) und dem zweiten Trichter (60) angeordnet ist, bevorzugt in einer Orientierung, sodass eine Fläche (55B) des zweiten Messers (52), die der Formwalze (20) zugewandt ist, in einer Ebene tangential zu der lateralen Oberfläche (20A) der Formwalze (20) angeordnet ist, und stärker bevorzugt mit einem Ende des zweiten Messers, das in Kontakt mit der lateralen Oberfläche (20A) der Formwalze (20) angeordnet ist, nach unten gerichtet.

3. Maschine nach Anspruch 1 oder 2, wobei das erste Messer (54) stromabwärts des zweiten Trichters (60) angeordnet ist, bevorzugt in einer Orientierung, sodass eine Fläche des ersten Messers (54), die der Formwalze (20) zugewandt ist, in einer Ebene tangential zu der lateralen Oberfläche (20A) der Formwalze angeordnet ist, und stärker bevorzugt mit einem Ende des ersten Messers (54), das in Kontakt mit der lateralen Oberfläche (20A) der Formwalze (20) angeordnet ist, nach oben gerichtet.

4. Maschine nach einem der vorhergehenden Ansprüche, ferner aufweisend:
- eine erste Presswalze (44), die im Wesentlichen tangential zu der Formwalze (20) und an der Seite stromabwärts eines Auslasses (42) des ersten Trichters in Bezug auf die Drehrichtung der Formwalze (20) angeordnet ist und die dazu ausgestaltet ist, einen Vorgang des Druckausübens auf den Teig durchzuführen, um die ersten Formhohlräume (C1) zu füllen und den darin enthaltenen Teig zu verdichten; und
- eine zweite Presswalze (64) die im Wesentlichen tangential zu der Formwalze (20) und an der Seite stromabwärts eines Auslasses (62) des zweiten Trichters in Bezug auf die Drehrichtung der Formwalze (20) angeordnet ist und die dazu ausgestaltet ist, einen Vorgang des Druckausübens auf den Teig durchzuführen, um die zweiten Formhohlräume (C2) zu füllen und den darin enthaltenen Teig zu verdichten.

5. Maschine nach Anspruch 4, wobei das erste Messer (54) zwischen die zweite Presswalze (64) und die Formwalze (20) stößt und dabei mit der lateralen Oberfläche (20A) der Formwalze (20) in einer direkt von einem Tangentialpunkt, oder einem Punkt der minimalen Distanz, zwischen der zweiten Presswalze (64) und der Formwalze (20) stromabwärtigen Position in Kontakt kommt.

6. Maschine nach Anspruch 4, wobei das zweite Messer (52) zwischen die erste Presswalze (44) und die Formwalze (20) stößt und dabei mit der lateralen Oberfläche (20A) der Formwalze (20) in einer direkt von einem Tangentialpunkt, oder einem Punkt der minimalen Distanz, zwischen der zweiten Presswalze (64) und der Formwalze (20) stromabwärtigen Position in Kontakt kommt.

7. Maschine nach einem der vorhergehenden Ansprüche, wobei die Formwalze (20) einen Durchmesser von mindestens 900 mm aufweist.

8. Maschine nach einem der vorhergehenden Ansprüche, aufweisend ein Förderband (80) zum Zuführen der halbfertigen Produkte, die in der Formwalze ausgebildet werden, zu einer nachfolgenden Bearbeitungsstation, die stromabwärts der Maschine angeordnet ist,
wobei das Förderband (80) mit der lateralen Oberfläche (20A) der Formwalze (20) in Kontakt kommt und für eine vorbestimmte Strecke darüber läuft, um die zweiten Formhohlräume (C2) zu verschließen und zu verhindern, dass halbfertige Produkte aus den zweiten Formhohlräumen (C2) austreten.

9. Verfahren zum Betreiben einer Formmaschine (100) nach einem der vorhergehenden Ansprüche, umfassend die Schritte des:
- Positionierens der Kolben (24) an der ersten Tiefe (D1) in den Hohlräumen (22) der Formwalze (20), wobei innerhalb der Hohlräume (22) die ersten Formhohlräume (C1) definiert sind;
- Füllens der ersten Formhohlräume (C1) über den ersten Trichter (40) mit einem ersten Teig;
- Ausführens eines Vorgangs des Schabens an der lateralen Oberfläche (20A) der Formwalze (20) mit dem zweiten Messer (52), um eine überschüssige Menge des ersten Teigs von den ersten Formhohlräumen (C1) zu entfernen, wobei innerhalb der ersten Formhohlräume (C1) eine erste Schicht des ersten Teigs ausgebildet ist;
- Positionierens der Kolben (24) an der zweiten Tiefe (D2) in den Hohlräumen (22) der Formwalze (20), wobei innerhalb der Hohlräume (22) die zweiten Formhohlräume (C2) definiert sind;
- Füllens der zweiten Formhohlräume (C2) über den ersten Trichter (40) mit einem zweiten Teig, der über die erste Schicht des ersten Teigs gelegt wird;
- Ausführens eines Vorgangs des Schabens an der lateralen Oberfläche (20A) der Formwalze (20) mit dem ersten Messer (54), um eine überschüssige Menge des zweiten Teigs von den zweiten Formhohlräumen (C2) zu entfernen, wobei innerhalb der zweiten Formhohlräume (C2) eine zweite Schicht des zweiten Teigs über der ersten Schicht des ersten Teigs ausgebildet ist; und
- Zuführens der ersten Schicht des ersten Teigs und der zweiten Schicht des zweiten Teigs, die über die erste Schicht gelegt ist, jedes der zweiten Formhohlräume zu einer Bearbeitungsstation.

10. Verfahren nach Anspruch 9, wobei Füllen der ersten Formhohlräume (C1) mit dem ersten Teig ein Pressen des ersten Teigs mit der ersten Presswalze (44) gegen die ersten Formhohlräume (C1) umfasst.

11. Verfahren nach Anspruch 9, wobei Füllen der zweiten Formhohlräume (C2) mit dem zweiten Teig ein Pressen des zweiten Teigs mit der ersten Presswalze (44) gegen den ersten Teig innerhalb der zweiten Formhohlräume (C2) umfasst.

## Revendications

1. Machine (100) de formage de pâtes pour produits alimentaires cuits au four, du type comportant :
- un rouleau de formage (20), qui est rotatif autour d'un axe de rotation (I) et présente une pluralité de cavités (22) débouchant sur sa surface latérale externe (20A) et s'étendant dans des directions radiales (Ri) respectives dudit rouleau de formage (20),
dans laquelle ledit rouleau de formage (20) comporte une pluralité de pistons (24), qui sont mobiles à l'intérieur des cavités (22), selon un mouvement de translation en va- et-vient, entre une première profondeur (D1) et une seconde profondeur (D2) supérieure à ladite première profondeur (D1),
dans laquelle, lorsque lesdits pistons (24) sont situés à ladite première profondeur (D1), à l'intérieur desdites cavités (22) des premières cavités de formage (Cl) sont définies, délimitées en dessous par lesdits pistons (24) et présentant une profondeur égale à ladite première profondeur (D1), et dans laquelle, lorsque lesdits pistons sont situés à ladite seconde profondeur (D2), à l'intérieur desdites cavités (22) des secondes cavités de formage (C2) sont définies délimitées en dessous par lesdits pistons (24) et présentant une profondeur égale à ladite seconde profondeur (D2),
ladite machine (100) comportant en outre :
- une première trémie (40) d'alimentation d'une première pâte auxdites cavités (22) dudit rouleau de formage (20), qui est positionnée dans une première position le long de la surface latérale (20A) dudit rouleau de formage (20), et une seconde trémie (60) d'alimentation d'une seconde pâte auxdites cavités (22) dudit rouleau de formage (20), positionnée dans une seconde position le long de la surface latérale (20A) dudit rouleau de formage, en aval de ladite première position de ladite première trémie par rapport à la direction de rotation dudit rouleau de formage (20) autour dudit axe de rotation (I) ;
ladite machine comportant un système d'entraînement desdits pistons configuré pour amener lesdits pistons (24) à ladite première profondeur (D1), dans une position correspondant à ladite première trémie (40), et pour amener lesdits pistons (24) à ladite seconde profondeur (D2), dans une position correspondant à ladite seconde trémie (60),
dans laquelle ladite machine (100) comporte en outre un couteau (54), qui est positionné en aval de ladite seconde trémie (60) et est configuré pour réaliser une action de raclage sur la surface latérale (20A) dudit rouleau de formage (20) de manière à enlever une quantité de pâte excédentaire de ladite seconde cavité de formage (C2),
ladite machine étant **caractérisée en ce qu'**elle comporte en outre un second couteau (52), qui est positionné en amont de ladite seconde trémie (60) et en aval de ladite première trémie (40) et est configuré pour réaliser une action de raclage sur la surface latérale (20A) dudit rouleau de formage (20) de manière à enlever une quantité de pâte excédentaire desdites premières cavités de formage (Cl).

2. Machine selon la revendication 1, dans laquelle ledit second couteau (52) est positionné entre ladite première trémie (40) et ladite seconde trémie (60), de préférence selon une orientation telle qu'une face (55B) dudit second couteau (52) orientée vers ledit rouleau de formage (20) soit positionnée dans un plan tangentiel à la surface latérale (20A) dudit rouleau de formage (20), et, encore plus préférentiellement, avec une extrémité dudit second couteau positionnée au contact de ladite surface latérale (20A) dudit rouleau de formage (20) orientée vers le bas.

3. Machine selon la revendication 1 ou 2, dans laquelle ledit premier couteau (54) est positionné en aval de ladite seconde trémie (60), de préférence selon une orientation telle qu'une face dudit premier couteau (54) orientée vers ledit rouleau de formage (20) soit positionnée dans un plan tangentiel à la surface latérale (20A) dudit rouleau de formage, et, encore plus préférentiellement, avec une extrémité dudit premier couteau (54) positionnée en contact avec ladite surface latérale (20A) dudit rouleau de formage (20) orientée vers le haut.

4. Machine selon l'une quelconque des revendications précédentes, comportant en outre :
- un premier rouleau presseur (44), sensiblement tangentiel audit rouleau de formage (20) et positionné sur le côté en aval d'une sortie (42) de ladite première trémie, par rapport à la direction de rotation du rouleau de formage (20), qui est configuré pour réaliser une action de pression sur la pâte de manière à remplir lesdites premières cavités de formage (Cl) et compacter la pâte qu'elles contiennent ; et
- un second rouleau presseur (64), sensiblement tangentiel audit rouleau de formage (20) et positionné sur le côté en aval d'une sortie (62) de ladite seconde trémie, par rapport à la direction de rotation du rouleau de formage (20), qui est configuré pour réaliser une action de pression sur la pâte de manière à remplir lesdites secondes cavités de formage (C2) et compacter la pâte qu'elles contiennent.

5. Machine selon la revendication 4, dans laquelle ledit premier couteau (54) pénètre entre ledit second rouleau presseur (64) et ledit rouleau de formage (20) venant en contact avec la surface latérale (20A) dudit rouleau de formage (20) dans une position immédiatement en aval d'un point de tangence, ou de distance minimale, entre ledit second rouleau presseur (64) et ledit rouleau de formage (20).

6. Machine selon la revendication 4, dans laquelle ledit second couteau (52) pénètre entre ledit premier rouleau presseur (44) et ledit rouleau de formage (20) venant en contact avec la surface latérale (20A) dudit rouleau de formage (20) dans une position immédiatement en aval d'un point de tangence, ou de distance minimale, entre ledit second rouleau presseur (64) et ledit rouleau de formage (20).

7. Machine selon l'une quelconque des revendications précédentes, dans laquelle ledit rouleau de formage (20) présente un diamètre d'au moins 900 mm.

8. Machine selon l'une quelconque des revendications précédentes, comportant une bande transporteuse (80) d'alimentation des produits semi-finis formés dans ledit rouleau de formage vers une station de traitement ultérieure, positionnée en aval de ladite machine,
dans laquelle ladite bande transporteuse (80) vient en contact avec la surface latérale (20A) dudit rouleau de formage (20) et passe dessus, pour un étirement prédéfini, de manière à fermer lesdites secondes cavités de formage (C2) et empêcher la sortie desdits produits semi-finis desdites secondes cavités de formage (C2).

9. Procédé de fonctionnement d'une machine de formage (100) selon l'une quelconque des revendications précédentes, comportant les étapes suivantes :
- le positionnement desdits pistons (24) à ladite première profondeur (D1) dans lesdites cavités (22) dudit rouleau de formage (20), à l'intérieur desdites cavités (22) étant définies lesdites premières cavités de formage (Cl) ;
- via ladite première trémie (40), le remplissage desdites premières cavités de formage (Cl) avec une première pâte ;
- via ledit second couteau (52), la réalisation d'une action de raclage sur la surface latérale (20A) dudit rouleau de formage (20) pour enlever une quantité excédentaire de ladite première pâte desdites premières cavités de formage (Cl), à l'intérieur desdites premières cavités de formage (Cl) étant formée une première couche de ladite première pâte ;
- le positionnement desdits pistons (24) à ladite seconde profondeur (D2) dans lesdites cavités (22) dudit rouleau de formage (20), à l'intérieur desdites cavités (22) étant définies lesdites secondes cavités de formage (C2) ;
- via ladite seconde trémie (60), le remplissage desdites secondes cavités de formage (C2) avec une seconde pâte qui est posée sur ladite première couche de ladite première pâte ;
- via ledit premier couteau (54), la réalisation d'une action de raclage sur la surface latérale (20A) dudit rouleau de formage (20) pour enlever une quantité excédentaire de ladite seconde pâte desdites secondes cavités de formage (C2), à l'intérieur desdites secondes cavités de formage (C2) étant formée une seconde couche de ladite seconde pâte sur ladite première couche de ladite première pâte ; et
- l'alimentation de ladite première couche de ladite première pâte et de ladite seconde couche de ladite seconde pâte disposée sur ladite première couche de chacune desdites secondes cavités de formage vers une station de traitement.

10. Procédé selon la revendication 9, dans lequel le remplissage desdites premières cavités de formage (Cl) avec ladite première pâte inclut le pressage de ladite première pâte contre lesdites premières cavités de formage (Cl) via ledit premier rouleau presseur (44).

11. Procédé selon la revendication 9, dans lequel le remplissage desdites secondes cavités de formage (C2) avec ladite seconde pâte inclut le pressage de ladite seconde pâte contre ladite première pâte à l'intérieur desdites secondes cavités de formage (C2) via ledit second rouleau presseur (64).
